# EUROPEAN PATENT APPLICATION

(11) **EP 3 919 348 A1**
(43) Date of publication of application: **08.12.2021**
(21) Application number: 20382466.9
(22) Date of filing: 01.06.2020
(51) Int. Cl.: B62B 3/14

(54) **TROLLEY**

(71) Applicant: Cart Technology, S.L., 28002 Madrid (ES)
(72) Inventor: MOHEDANO MEDINA, Alberto José, 28002 Madrid (ES); AHERN, Colm Thomas, 28805 Alcalá de Henares (ES)
(74) Representative: Elzaburu S.L.P.

(57) **Abstract**

Trolley comprising a basket (11), front legs (9) and rear legs (5), where the trolley comprises a load-carrying device (1) fixed to the rear legs (5), where the load-carrying device (1) comprises a tray (2) configured to transport objects on the trolley outside the basket (11), where the load-carrying device (1) is configured to take a retracted position when not in use and a deployed position for transporting loads in the tray (2), where the load-carrying device (1) comprises side-stops (3) which are separated by a distance greater than or equal to the distance between the rear legs (5).

## Description

### Purpose of the invention

The present invention involves a trolley, specifically, a supermarket trolley, which incorporates a rear load-carrying device that allows bulky items to be carried outside of the trolley basket.

The hereby detailed trolley has the advantage that its rear load-carrying device can be deployed and retracted easily, ensuring, on the one hand, that when the load-carrying device is deployed, the load can be transported safely and with maximum use of the available space from the rear of the trolley and, on the other hand, that when the load-carrying device is retracted, a second trolley can be nested in the rear of the first trolley by inserting the second trolley's basket into the first trolley's basket through the rear of the first trolley.

The trolley involved in this invention can be particularly applied in the design, manufacture, marketing and operation of trolleys used for the transport of any type of load, with specific application in shopping centers or large areas where transporting loads is frequently needed (airports, stations, hospitals, hotels, etc.)

### Background of the invention and technical problem to be solved

Some state-of-the-art trolleys are known to comprise a tray or load-carrying device at the back, where the load carrier is intended to carry bulky or heavy items that could crush other softer loads carried in the trolley basket. Alternatively, other personal effects of the person moving the trolley, such as a bag, a sports bag, etc. may be carried in the load-carrying device.

Document DE 10332868 B4 discloses a shopping trolley with a rear load-carrying device. The load-carrying device in this document consists of a tray with a rear-stop. This tray and rear-stop are linked to side-stops which project from the rear legs of the trolley so that, in the deployed state of the tray with its rear-stop, a load to be transported in the load-carrying device would be placed on the tray, the transport space being limited laterally by the dimension between the side-stops as well as the rear legs of the trolley itself, and would be limited at the rear by the rear-stop of the tray and at the front by the trolley's rear legs and/or basket.

In the document mentioned above, the attempt to maximize the load-carrying space has led to a design in which the side-stops are as far apart as possible, i.e. projecting from the rear legs of the trolley. Using a trolley with this design means that, when the load-carrying device is to be retracted, the rear-stop of the tray must be positioned above the upper front end of these side-stops in order to leave enough space between the rear legs of the trolley so as to allow, when nesting a second trolley, the front legs of the second one to be inserted between the rear legs of the first one. If the rear-stop of the tray does not remain above the upper front end of the side-stops when the tray is retracted, there will not be sufficient clearance between the rear legs to allow the nesting of a second trolley.

The above situation has a design disadvantage that limits the versatility when it comes to modifying the dimensions of the tray of the load-carrying device, always having to resort to a tray design, rear-stop and tray opening/closing radius necessarily constrained by the dimensions of the side-stops.

### Description of the invention

In order to solve the above-mentioned disadvantages, this invention refers to a trolley, specifically the type of trolley used in supermarkets and shopping centers.

The trolley of the hereby described invention comprises a basket and a support structure comprising rear legs.

The support structure of the trolley may comprise rear legs and front legs, configured respectively for their connection with the rear and front wheels.

Alternatively, the supporting structure of the trolley may comprise only the rear legs connecting to a horizontal base structure, which in turn connects with the rear and front wheels.

The trolley has a load-carrying device fixed to the rear legs. This load-carrying device comprises a tray configured to carry objects on the trolley outside the basket. The load-carrying device is configured to adopt a retracted position when not in use (when transporting objects outside the basket is not needed) and a deployed position for transporting loads on the tray.

When reference is made to the tray of the load-carrying device, this does not necessarily mean a clear surface for transporting objects, but, in a broad sense, also a set of bars forming a grid or lattice that allows objects to be positioned on this grid or lattice.

A novel aspect of the trolley of this invention is that the load-carrying device comprises some side-stops. These side-stops are separated from each other by a distance greater than or equal to the distance between the rear legs.

As they are comprised in the device itself, which is movable between the retracted and deployed positions on its own, the side-stops of the device are thus also moveable between these retracted and deployed positions. This makes the configuration of the load-carrying device particularly advantageous as the design of the entire device is not conditioned by the presence of fixed side-stops whose presence must be overcome as if it were an obstacle, as was the case in the prior art.

Similarly, the fact that the side-stops are separated by a distance greater than or equal to the distance between the rear legs of the trolley means that the side-stops do not constitute an obstacle to the passage of the front legs of a second trolley when it is nested with the first trolley, by accessing it from the rear of the first trolley.

Preferably, in the trolley of the present invention, the load-carrying device comprises a rear-stop. This prevents objects carried in the tray from sliding and falling off from the rear of the tray.

In a preferred embodiment, the tray comprises the rear-stop so that the tray and rear-stop are formed as a single part. This greatly simplifies the design and assembly of the load-carrying device.

When reference is made to two elements formed as a single part, this includes the possibility that both elements form a single body or two different bodies which are rigidly joined together (e.g. by welding) so that they behave as a single body.

Preferably, the tray comprises the side-stops so that tray and side-stops are also formed as a single part.

According to one possible embodiment, each side-stop is connected to each rear leg of the trolley by a linking section comprising an articulated connection to the leg so that the device's retraction and deployment movement involves the rotation of the side-stops in relation to the rear legs by means of the articulated joints of the linking sections.

In this way, the deployment and retraction of the side-stops of the device can be carried out by a simple rotational movement, which can be independent or not of the deployment and retraction movements of the tray and the device's rear-stop.

In the event that the side-stops and/or the rear-stops are comprised in the tray, the load-carrying device can be deployed and/or retracted by means of a simple rotation of the assembly formed by tray and/or rear and/or side-stops.

In the retracted position, the front end of the side-stops is below the rear end of the side-stops.

Also, in the retracted position, the rear-stop is located above the side-stops, leaving the space between the rear legs free to allow for the nesting of a second trolley accessing at the back of the first one.

According to one possible embodiment, in the trolley of the present invention the tray of the load-carrying device is divided into a front and a rear part, the front and rear parts being connected by an articulated joint. This allows the deployment and retraction movement of the device by rotating the rear part of the tray with respect to the front part.

Continuing with the description from the previous paragraph, according to one possible embodiment, the tray's rear-stop and the rear part of the tray are formed as a single part. The load-carrying device is configured so that, in the retraction movement, the rear part of the tray rotates with respect to the front part until the rear-stop hits a crossbeam at the bottom of the basket. In this way, the retraction movement of the device is limited when the rear-stop hits the crossbeam.

According to one possible embodiment, the side-stops and the mentioned rear part of the tray are formed as a single part. Thus, when the rear part is rotated in relation to the front part of the tray, the side-stops are arranged in an extended or retracted position respectively.

According to one possible embodiment of the trolley of the invention, each side-stop of the load-carrying device connects to each rear leg of the trolley through a connecting section comprising a sliding joint along a rail that runs along the corresponding rear leg, so that the deployment and retraction movement of the device involves sliding the tray and the side-stops with respect to the rear legs by means of the sliding joints of the sections of connection along the rails of the rear legs.

The embodiment mentioned in the previous paragraph offers the advantage of allowing great design compactness and simplicity, making it unnecessary to take into account the path of rotating elements to prevent the interposition of objects in their trajectory.

Preferably, in the trolley of the invention the load-carrying device incorporates limiting stops of the deployment movement configured to act as stops against the rear legs, so that the load-carrying device is configured to deploy until the limiting stops hit the rear legs of the trolley.

This provides a simple mechanical solution, valid both for the sliding connection by means of rails and for the rotary connection of the linking sections to the rear legs, in order to ensure a maximum limit to the deployment path of the load-carrying device.

The present invention refers also to a load-carrying device for trolleys, where the load-carrying device comprises the features according to the previously described embodiments.

### Brief description of the figures

As part of the explanation of at least one embodiment of the invention the following figures are included.
Figure 1: Shows a schematic view of one embodiment of the trolley which is the subject of the present invention.
Figure 2: Shows a detailed view of one embodiment of the load-carrying device of the trolley.

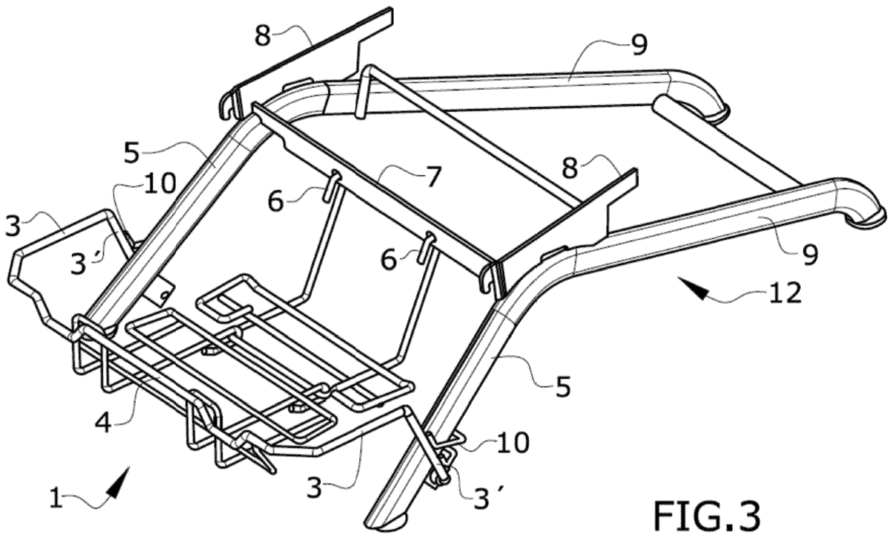

Figure 3: Shows a further detailed view of the arrangement of the load-carrying device between the rear legs of the trolley, where the tray of the load-carrying device is in the deployed position.

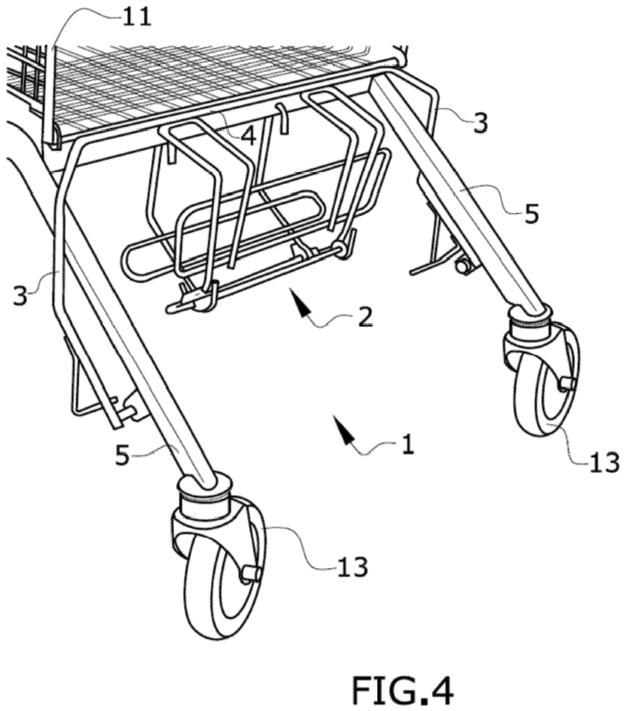

Figure 4: Shows a view of the arrangement of the load-carrying device fixed to the rear legs of the trolley, where the load-carrying tray is in the retracted position.

### Detailed description

As previously mentioned, the present invention refers to a trolley.

The trolley comprises a basket (11) and a support frame (12) for the basket (11). The support frame (12) is configured to connect the basket (11) to the wheels (13) of the trolley.

The figures show a type of trolley where the support frame (12) consists of rear legs (5) and front legs (9). However, the present invention is equally applicable in trolleys where the support frame (12) has an alternative configuration or morphology where, for example, only the rear legs (5) are connecting the basket (11) with a base structure to which the front and rear wheels are attached.

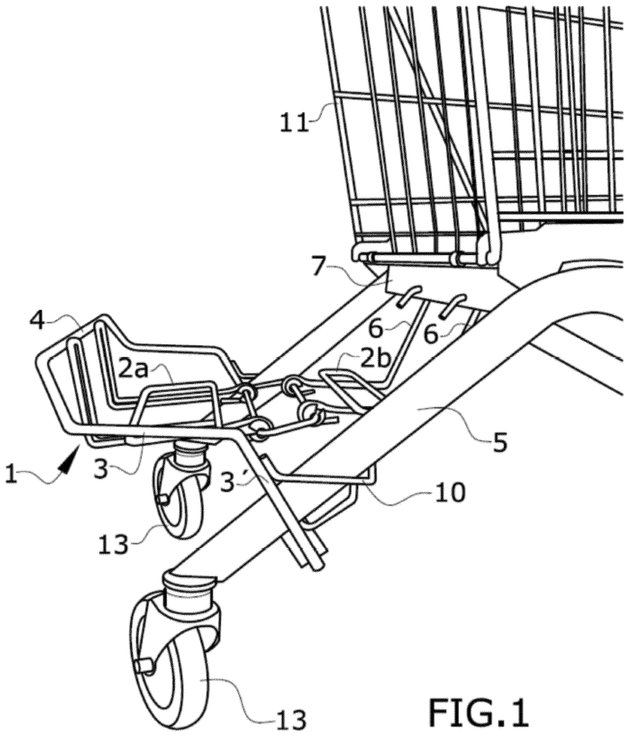

As shown in Figure 1, the trolley of the present invention comprises a load-carrying device (1) under the basket (11), fixed on the trolley's rear legs (5).

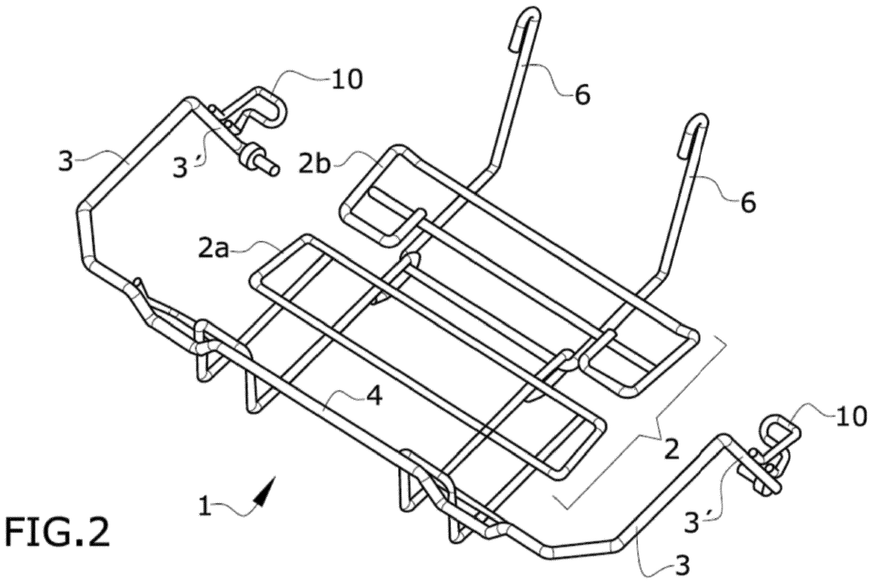

Figure 2 shows one embodiment of the load-carrying device (1) in greater detail.

The load-carrying device (1) comprises a tray (2) connected by rods (6) to a crossbeam (7), so that the rods (6) can pivot with respect to the crossbeam (7) by means of articulated joints between the rods (6) and the crossbeam (7).

The crossbar (7) is connected on each side to a frame (8), which is connected to the trolley basket (11).

In this way, the device (1) can be retracted and deployed when the tray (2) is tilted or pivoted in relation to the crossbeam (7) by means of the rods (6).

According to one embodiment, the tray (2) is divided into a front part (2b) and a rear part (2a), where the rear part (2a) is joined to the front part (2b) in articulated fashion so that the deployment and retraction movement of the device (1) can take place by pivoting or tilting the rear part (2a) of the tray (2) with respect to the front part (2b) of the tray (2).

The device (1) comprises a rear-stop (4) of the tray (2) as well as side-stops (3) of the tray (2).

Preferably, both the rear-stop (4) and the side-stops (3) would be formed as a single part together with the tray (2), either as a single part together with the rear portion (2a) of the tray (2) (in the case of a tray (2) divided into two portions), or a single part together with the entire tray (2) (in the case of a tray (2) made without division into front and rear parts).

The distance between the side-stops (3) is equal to or greater than the distance between the rear legs (5) of the trolley. This ensures that the side-stops (3) will not get in the way of the front legs (9) of a second trolley (not shown) which is to be nested by accessing through the rear of the first trolley.

The side-stops (3) connect to the rear legs (5) of the trolley through connecting sections (3') provided with articulated joints with the rear legs (5) of the trolley. This allows the device (1) to rotate/pivot/flip around these articulated joints of the connecting sections (3') of the side-stops (3).

The device (1) comprises deployment movement limiting stops (10). These limiting stops (10) project from the connecting sections (3') of the side-stops (3) and surround the rear legs (5) of the trolley from the front. This way, when the device is deployed, a point is reached where these limiting stops (10) hit the legs (5) of the trolley, thus terminating the deployment movement of the device (1).

When retracting the device (1), the crossbeam (7) acts as a limiting stop, because when the device (1) is retracted, there comes a moment when the rear-stop (4) hits the crossbeam (7), thus ending the retraction movement.

According to one embodiment that is not shown in the figures, instead of the rods (6) and/or instead of the articulated joints between the connecting sections (3') and the rear legs (5), the connecting sections (3') connect to rails running in correspondence with the rear legs (5) of the trolley, so that by sliding the ends of the connecting sections (3') along the above-mentioned rails, the device can be deployed and retracted (1).

## Claims

1. Trolley comprising a basket (11) and a support frame (12) of the basket (11), where the support frame (12) comprises rear legs (5), where the trolley comprises a load-carrying device (1) fixed to the support structure (12), where the load-carrying device (1) comprises a tray (2) configured to carry objects in the trolley outside the basket (11), where said load-carrying device (1) is configured to assume a retracted position when not in use and a deployed position for the transport of loads on the tray (2), **characterized in that** the load-carrying device (1) comprises side-stops (3) which are separated by a distance greater than or equal to the distance between the rear legs (5).

2. Trolley according to claim 1, **characterized in that** the load-carrying device (1) comprises a rear-stop (4).

3. Trolley according to claim 2, **characterized in that** the tray (2) comprises the rear-stop (4).

4. Trolley according to any of the previous claims, **characterized in that** the tray (2) comprises the side-stops (3).

5. Trolley according to any of the previous claims, **characterized in that** each side-stop (3) connects to each rear leg (5) of the trolley through a connecting section (3') comprising an articulated joint with each corresponding rear leg (5), so that the deployment and retraction movement of the device (1) involves the rotation of the side-stops (3) in relation to the rear legs (5) by means of the articulated joints of the linking sections (3').

6. Trolley according to any of the claims 3 to 5, **characterized in that** the tray (2) is divided into a front part (2b) and a rear part (2a), the front part (2b) and the rear part (2a) being connected by means of an articulated joint.

7. Trolley according to claim 6, **characterized in that** the rear-stop (4) and the rear part (2a) of the tray (2) are formed as a single part, where the load-carrying device (1) is configured so that, in the retraction movement, the rear part (2a) of the tray rotates with respect to the front part (2b) until the rear-stop (4) hits a crossbeam (7) located at the bottom of the basket (11).

8. Trolley according to claims 6 or 7, **characterized in that** the side-stops (3) and the rear portion (2a) of the tray (2) are formed as a single part.

9. Trolley according to claim 4, **characterized in that** each side-stop (3) connects with each rear leg (5) of the trolley through a connecting section (3') comprising a sliding joint along a rail that runs along with the corresponding rear leg (5), so that the retraction and deployment movement of the device (1) involves sliding the tray (2) and the side-stops (3) with respect to the rear legs (5) by means of the sliding joints of the connecting sections (3') along the rear leg rails (5).

10. Trolley according to any of the previous claims, **characterized in that** the load-carrying device (1) comprises deployment movement limiting stops (10) configured to act as stops against the rear legs (5), so that the load-carrying device (1) is configured to deploy until the limiting stops (10) hit the rear legs (5) of the trolley.

11. Load-carrying device (1) configured to be attached to a basket support frame (12) on a trolley, where said support frame (12) comprises rear legs (5) of the trolley, where said load-carrying device (1) comprises a tray (2) configured to carry objects outside the basket (11) of the trolley, where said load-carrying device (1) is configured to adopt, in relation to the support structure (12), a retracted position in disuse and a deployed position for the transport of loads on the tray (2), where the device (1) is **characterized in that** it comprises side-stops (3).

12. Load-carrying device (1) in accordance with Claim 11, **characterized in that** the side-stops (3) are separated by a distance greater than or equal to the distance between the rear legs (5) of the trolley.

13. Load-carrying device (1) according to any of the claims 11 or 12, **characterized in that** it comprises a rear-stop (4).

14. Load-carrying device (1) according to any of the claims 11 to 13, **characterized in that** the tray (2) is divided into a front part (2b) and a rear part (2a), the front part (2b) and the rear part (2a) being connected by an articulated joint.

15. Load-carrying device (1) according to claim 14, **characterized in that** the rear portion (2a) of the tray (2) comprises the side-stops (3) and the rear-stop (4).

## Amended claims

### Amended claims in accordance with Rule 137(2) EPC.

1. Trolley comprising a basket (11) and a support frame (12) of the basket (11), where the support frame (12) comprises rear legs (5), where the trolley comprises a load-carrying device (1) fixed to the support frame (12), where the load-carrying device (1) comprises a tray (2) configured to carry objects in the trolley outside the basket (11), where said load-carrying device (1) is configured to assume a retracted position when not in use and a deployed position for the transport of loads on the tray (2), **characterized in that** the load-carrying device (1) comprises side-stops (3) which are separated by a distance greater than or equal to the distance between the rear legs (5), wherein through a connecting section (3') of each side-stop (3), each side-stop (3) connects to each rear leg (5) of the trolley, each connecting section (3') comprising a first articulated joint with each corresponding rear leg (5), so that the deployment and retraction movement of the device (1) involves the rotation of the side-stops (3) in relation to the rear legs (5) by means of the first articulated joints of the linking sections (3').

2. Trolley according to claim 1, **characterized in that** the load-carrying device (1) comprises a rear-stop (4).

3. Trolley according to claim 2, **characterized in that** the tray (2) comprises the rear-stop (4).

4. Trolley according to any of the previous claims, **characterized in that** the tray (2) comprises the side-stops (3).

5. Trolley according to any of the claims 3 to 4, **characterized in that** the tray (2) is divided into a front part (2b) and a rear part (2a), the front part (2b) and the rear part (2a) being connected by means of a second articulated joint.

6. Trolley according to claim 5, **characterized in that** the rear-stop (4) and the rear part (2a) of the tray (2) are formed as a single part, where the load-carrying device (1) is configured so that, in the retraction movement, the rear part (2a) of the tray rotates with respect to the front part (2b) until the rear-stop (4) hits a crossbeam (7) located at the bottom of the basket (11).

7. Trolley according to claims 5 or 6, **characterized in that** the side-stops (3) and the rear part (2a) of the tray (2) are formed as a single part.

8. Trolley according to any of the previous claims, **characterized in that** the load-carrying device (1) comprises deployment movement limiting stops (10) configured to act as stops against the rear legs (5), so that the load-carrying device (1) is configured to deploy until the limiting stops (10) hit the rear legs (5) of the trolley.
